# EUROPEAN PATENT SPECIFICATION

(11) **EP 3 575 145 B1**
(45) Date of publication and mention of the grant of the patent: **24.03.2021**
(21) Application number: 18745414.5
(22) Date of filing: 22.01.2018
(51) Int. Cl.: B60N 2/68, A47C 7/40, B60N 2/427, B60N 2/64, B60N 2/90

(54) **VEHICULAR SEAT BACK FRAME STRUCTURE**
RAHMENSTRUKTUR FÜR FAHRZEUGSITZLEHNEN
STRUCTURE DE CADRE DE DOSSIER DE SIÈGE DE VÉHICULE

(30) Priority: 24.01.2017 JP 2017010472
(43) Date of publication of application: 04.12.2019
(73) Proprietor: Suzuki Motor Corporation, Hamamatsu, Shizuoka 432-8611 (JP)
(72) Inventor: YASUIKE, Shigeaki, Hamamatsu-shi, Shizuoka 432-8611 (JP); KOMURA, Shogo, Hamamatsu-shi, Shizuoka 432-8611 (JP); SAKURAI, Akihiro, Hamamatsu-shi, Shizuoka 432-8611 (JP); KIKUCHI, Ryo, Yokohama-shi, Kanagawa 222-0033 (JP); ANDO, Yukinori, Yokohama-shi, Kanagawa 222-0033 (JP)
(74) Representative: Freischem & Partner Patentanwälte mbB
(86) International application number: PCT/JP2018/001704
(87) International publication number: WO 2018/139385

(56) References cited:
- WO-A1-2013/021484
- JP-A- 2004 016 710
- JP-A- 2010 046 162
- JP-A- 2016 150 658
- US-A- 5 626 396
- US-A1- 2004 227 389

## Description

### Technical Field

The present invention relates to a vehicular seatback frame structure according to the preamble of claim 1.

### Background Art

A vehicular seat is provided with a seat cushion on which a passenger is seated, and a seatback that supports upper limbs of a passenger. There is known a frame configuring the seatback, which is formed of a resin material such as a fiber-reinforced composite material, as disclosed in JP 2014-65341, for example. The seatback frame in this example has a hollow closed cross-sectional structure for an improvement on strength and rigidity, further reducing weight of the seat.

An attempt to integrally form the hollow closed cross-sectional structure lead to higher cost compared to a case of forming a hollow closed cross-sectional structure by joining two members, for example. Therefore, two members, each having a cross-sectional shape one side of which is open, for example, a bracket-shaped (]-shaped) open cross-sectional structure, are regularly combined, which are bonded by an adhesive agent to form a hollow closed cross-sectional structure.

US 2004 0227389 A1 discloses a seat back frame for a vehicle seat that includes first and second side members made of ultra-high tensile strength steel, an upper member and a lower member arranged between the two side members and also made of ultra-high tensile strength steel. From JP 2010 046162 A, a vehicle seat back frame structure is known that has planar side frames and a cross member disposed between the upper ends of the side frames. The material of the elements described JP 2010 046162 A is not disclosed. WO 2013 021484 A1 presents a seat back frame with two side frames and an upper frame formed by a seat frame material obtained by laminating a plurality of sheets of a sheet-like resin material, in which a reinforcing fiber material is inserted. The lateral ends of the upper frame are connected to the upper ends of the side frames.

### Summary of Invention

### Technical Problem

In the structure as described above, since the seatback frame is all formed of the closed cross-sectional structure, the seatback frame has the structure having higher rigidity than a steel seat frame for a compact car or a lightweight car that does not require high rigidity, and is possibly overengineered, which is called overspecification. Following the overspecification, the seat weight is also possibly heavy.

In the example, two components as a section (upper cross member) extending in the seat width direction of an upper part of the seatback frame overlap in the seat front-back direction to form a closed cross-sectional structure, which is fixed by an adhesive agent. However, in a rear collision, when a collision load is input to the upper cross member, the center of the upper cross member is deformed to bend to the backward side. When this deformation is generated, a load in a deviation direction is input to a joining part formed by the adhesive agent.

The adhesive agent is possibly lower in strength relative to the deviation load than to the shear load. Therefore, the generation of this deformation is not desirable for the bonding structure using the adhesive agent.

In addition, a section for supporting the headrest is provided in the upper part of the seatback frame, but in many cases, the section is formed in a complicated shape. Therefore, in a case of forming the seatback frame of a fiber-reinforced resin material, degree of difficulty in forming is high, possibly leading to reduced productivity.

Further, since an outer frame member and an inner frame member are bonded by adhesive agent, a coated area of the adhesive agent becomes large, whereby a coating amount of the adhesive agent also increases. In addition, since a coated position of the adhesive agent is complicated, the workability is possibly deteriorated and a material cost of the adhesive agent possibly increases.

The present invention is made for solving the foregoing problems, and an object of the present invention is to provide a vehicular seatback frame structure that can suppress separation of a bond in a bonded section of a closed cross-sectional structure provided in an upper cross member configuring a seatback frame and ensure the rigidity of the upper cross member.

### Solution to Problem

For achieving the object, a vehicular seatback frame structure, according to the present invention, comprises the sum of features defined by claim 1. In particular, the seatback frame structure comprises two resin side frames that extend in a vehicle vertical direction and are arranged to be spaced in a seat width direction, and an upper cross member that extends in the seat width direction and connects upper parts of the respective side frames. In the vehicular seatback frame structure, the upper cross member includes a first member extending in the seat width direction, and a second member disposed under the first member and extending in the seat width direction. The first member has a lower part that is provided with a downward opening part extending in the seat width direction and opening to the vehicle downward side, the second member has an upper part that is provided with an upward opening part extending in the seat width direction and opening to the vehicle upward side, and the upper cross member has a closed cross-sectional structure configured by the downward opening part of the first member and the upward opening part of the second member. A vehicle vertical position of a joining part between the upper cross member and the side frame is disposed closer to the vehicle downward side than the vehicle vertical position of the closed cross-sectional structure of the upper cross member and closer to the vehicle upward side than the vehicle vertical position in which a front-back direction width of the side frame is the smallest.

### Advantageous Effects of Invention

According to the present invention, it is possible to suppress the separation of the bond in the bonded section of the closed cross-sectional structure provided in the upper cross member configuring the seatback frame and ensure the rigidity of the upper cross member.

### Brief Description of the Drawings

Figure 1 is a schematic perspective view showing a state in which a seat cushion cover and the like are installed in a vehicular seatback frame structure according to the present invention.
Figure 2 is a schematic perspective view showing a state in which an upper part of a seatback frame is partially exposed by cutting away a part of a vehicular seatback cover in Figure 1.
Figure 3 is an exploded perspective view showing a state before left and right longitudinal frames of the seatback frame and a first member and a second member configuring an upper cross member in Figure 2 are assembled.
Figure 4 is a side view showing a state in which the left longitudinal frame and the upper cross member in Figure 3 are assembled and a cross section of the upper cross member.
Figure 5 is a cross section taken in the direction of arrows A - A in Figure 4.

### Description of Embodiment

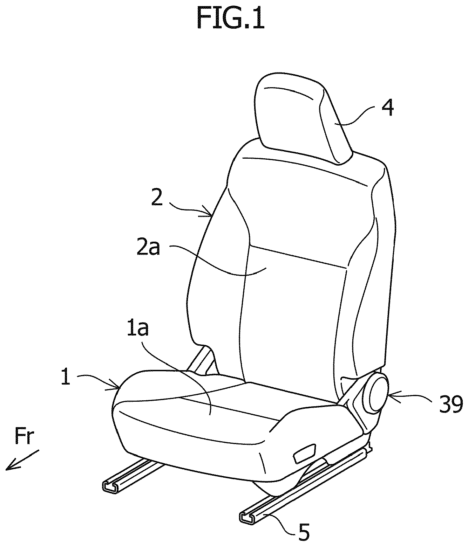

Hereinafter, an explanation will be made of a vehicular seatback frame structure according to an embodiment of the present invention with reference to the drawings (Figures 1 to 5).

The vehicular seatback frame structure according to the present embodiment will be explained, as shown in Figure 1, by taking a seatback frame structure of a vehicular seat for a single passenger such as an operator's seat or a front passenger seat, as an example. The vehicular seat is provided with a seat cushion 1, a seatback 2, and a headrest 4.

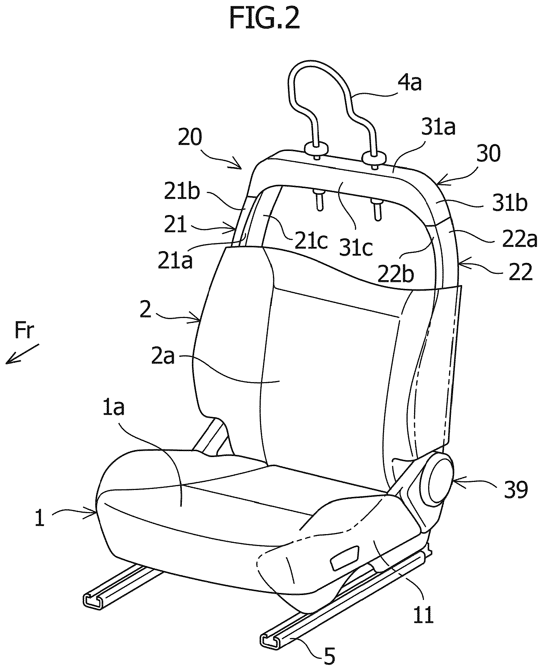

First, an explanation will be made of the seat cushion 1. The seat cushion 1 has, as shown in Figure 1 and Figure 2, a seating surface part 1a on which a passenger is seated. The seat cushion 1 is configured to be slidable on rails 5 installed on a vehicle body floor panel (not shown). An explanation on a slide mechanism for sliding the seat cushion 1 is omitted.

Seat cushion frames 11 configuring a framework of the seat cushion 1 are provided in the inside of the seat cushion 1. Although detailed illustration is omitted, the seat cushion frames 11 are arranged in both side parts in the left and right of the seating surface part 1a in the inside of the seat cushion 1.

The left and right herein correspond to the left and right when a passenger seated on the vehicular seat is looking at the vehicle forward side. That is, the seat cushion frame 11 as virtually shown in Figure 2 is the left seat cushion frame 11.

The seat cushion frame 11 is a plate-shaped member that is formed of a carbon fiber-reinforced resin material, and extends in the vehicle front-back direction in a state of erecting to the vehicle body floor panel as shown in Figure 2. A lower part of the seat cushion frame 11 is configured to be slidable on the rail 5.

Next, an explanation will be given of the seatback 2. The seatback 2 is, as shown in Figure 1 and Figure 2, a member having a backrest part 2a that can support upper limbs of a passenger. The seatback 2 is configured to be relatively rotatable to the seat cushion 1 by a reclining mechanism 39. The headrest 4 is detachably attached to an upper part of the seatback 2.

A seatback frame 20 configuring a framework of the seatback 2 is, as shown in Figure 2, provided in the inside of the seatback 2. Hereinafter, an explanation will be given of the seatback frame 20. The seatback frame 20 has a right longitudinal frame (a side frame) 21 and a left longitudinal frame (a side frame) 22, which are formed of a carbon fiber-reinforced resin material.

The right longitudinal frame 21 and the left longitudinal frame 22 are arranged in the left and the right (in both the side parts in the seat width direction) of the backrest part 2a of the seatback 2 and are arranged in parallel to be spaced away from each other in the seat width direction and to be paired.

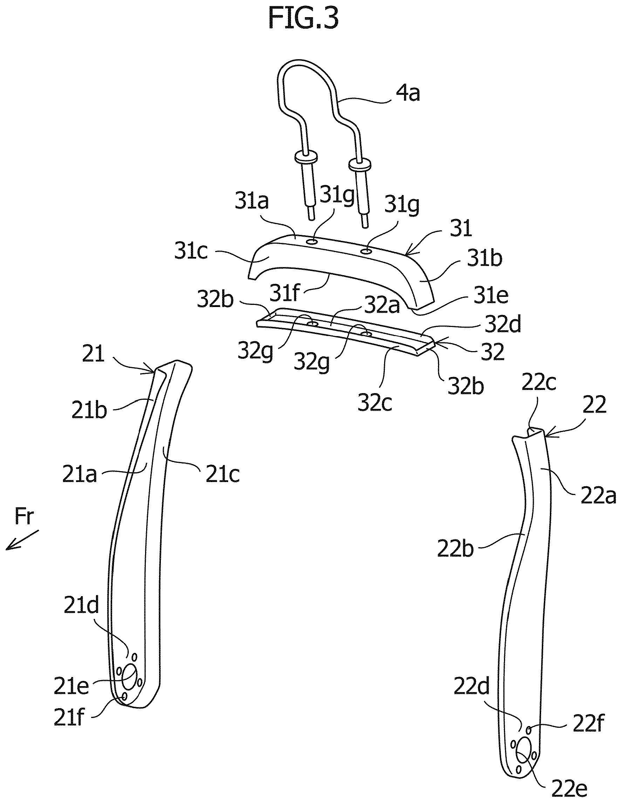

The right longitudinal frame 21 is a member extending to the vehicle upward side from a rear part of a right seat cushion frame (not shown), and is rotatably attached to the right seat cushion frame through the reclining mechanism 39. The right longitudinal frame 21 includes, as shown in Figure 2 and Figure 3, a longitudinal wall part 21a having a surface exposed to an outer side and an inner side in the vehicle width direction, and flange parts 21b, 21c extending from an edge end of the longitudinal wall part 21a to the central side in the seat width direction, which are integrally formed.

The rear flange part 21c extending from a rear end of the longitudinal wall part 21a to the central side in the seat width direction is longer in an extension length (a length in the seat width direction) than the front flange part 21b extending from a front end of the longitudinal wall part 21a to the central side in the seat width direction. An inner opening part opening in the seat width direction is configured by the flange parts 21b, 21c. In this example, a ]-shaped plane cross section (an open cross-sectional structure) opening to the central side (the inner side) in the seat width direction is formed by the longitudinal wall part 21a, the front flange part 21b and the rear flange part 21c.

A lower part of the longitudinal wall part 21a is provided with an installation part 21d for attaching the reclining mechanism 39. The installation part 21d in this example has one large diameter hole 21e and four small diameter holes 21f arranged in a radial outer side of the large diameter hole 21e. The small diameter holes 21f are arranged to be equally spaced in the periphery of the large diameter hole 21e. The reclining mechanism 39 is attached to the holes 21e, 21f by fastening members or the like. A detailed explanation of the reclining mechanism 39 is omitted, but main bodies of the reclining mechanism 39 are arranged to both the outer sides of the left and right longitudinal frames 21, 22 in the seat width direction, and are joined by a pipe to form the reclining mechanism 39.

Next, an explanation will be given of the left longitudinal frame 22. The left longitudinal frame 22 is, as shown in Figure 2, a member extending from a rear part of the left seat cushion frame 11 to the vehicle upward side, and is rotatably attached to the left seat cushion frame 11 through the reclining mechanism 39. The left longitudinal frame 22 includes, as shown in Figure 3 and as similar to the right longitudinal frame 21, the longitudinal wall part 22a, the front flange part 22b and the rear flange part 22c, which are integrally formed to configure a ]-shaped plane cross section (an open cross-sectional structure) opening to the central side (the inner side) in the seat width direction.

A lower part of the longitudinal wall part 22a in the left longitudinal frame 22 is, as similar to the longitudinal wall part 21a of the right longitudinal frame 21, provided with an installation part 22d for attaching the reclining mechanism 39. The installation part 22d has, as similar to the right longitudinal frame 21, one large diameter hole 22e and four small diameter holes 22f arranged in a radial outer side of the large diameter hole 22e.

Further, the seatback frame 20 has, as shown in Figure 3, an upper cross member 30 connecting an upper part of the right longitudinal frame 21 and an upper part of the left longitudinal frame 22. Hereinafter, an explanation will be made of the configuration of the upper cross member 30.

The upper cross member 30 is a member extending in the seat width direction, and has two members, that is, a first member 31 and a second member 32.

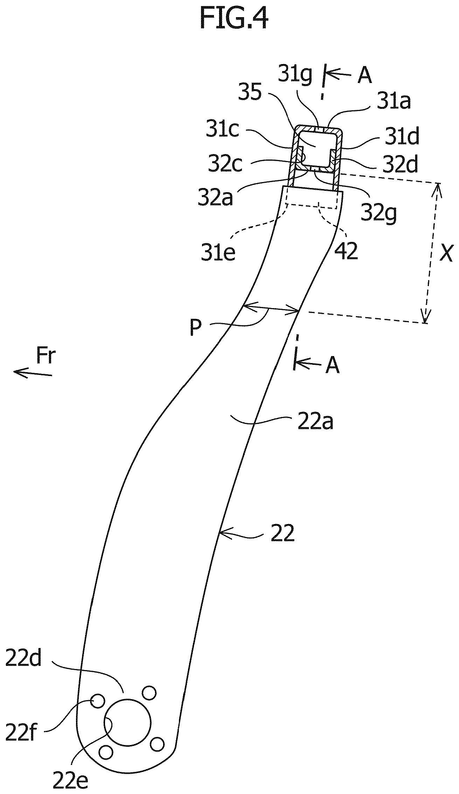

The first member 31 includes, as shown in Figure 3 and Figure 4, an upper surface part 31a, a first front wall part 31c, a first rear wall part 31d and side surface parts 31b in both side parts in the seat width direction. The upper surface part 31a is a section extending in the seat width direction, and a central part of the upper surface part 31a in the seat width direction is formed as a substantially flat surface.

The side surface parts 31b are sections provided in both of outer side ends of the upper surface part 31a in the seat width direction. The side surface part 31b is formed as a curved inclined surface that is curved and inclined to the vehicle downward side toward the outer side in the seat width direction from the outer side end. A center (not shown) of a curvature radius of the curve is disposed closer to the vehicle downward side than the upper surface part 31a.

The first front wall part 31c includes a flat, plate-shaped section extending in the seat width direction in a state of extending from a front end of the upper surface part 31a to the vehicle downward side, and a flat, plate-shaped section extending in the seat width direction in a state of extending from a front end of the side surface part 31b to the vehicle downward side.

The first front wall part 31c positioned in the front end of the side surface part 31b is curved to the vehicle downward side along the inclination of the side surface part 31b. A lower end 31e of the first front wall part 31c disposed in the front end of the side surface part 31b is disposed closer to the vehicle downward side than a lower end 31f of the first front wall part 31c disposed in the front end of the upper surface part 31a. That is, a ridge shape of the lower ends 31e, 31f of the first front wall part 31c is formed in a shallow U shape opening to the downward side in a seat forward view.

Since the first rear wall part 31d is a section hidden in Figure 3, the illustration is omitted, but the first rear wall part 31d is a flat, plate-shaped section extending in the seat width direction as similar to the first front wall part 31c in a state of extending to the vehicle downward side from each of the rear end of the upper surface part 31a and the rear end of the side surface part 31b. The first rear wall part 31d is formed in a shape substantially equal to that of the first front wall part 31c, and is curved to the vehicle downward side along the inclination of the side surface part 31b in each of both the end parts of the first rear wall part 31d in the seat width direction.

An opening part (a downward opening part) opening to the vehicle downward side is formed in a lower part of the first member 31 by a lower part of the first front wall part 31c, a lower part of the first rear wall part 31d and lower parts of the side surface parts 31b in both the left and right. The first member 31 is formed in a box shape opening to the vehicle downward side.

An edge part of the downward opening part is configured by the lower ends 31e, 31f of the first front wall part 31c, the lower end of the first rear wall part 31d and the like, and is inclined to curve to the vehicle downward side toward the outer side in the seat width direction in both the side parts in the seat width direction. In addition, a ]-shaped traverse cross section (an open cross-sectional structure) opening to the vehicle downward side is configured in the first member 31 by the upper surface part 31a, the first front wall part 31c and the first rear wall part 31d.

A right joining part 41 and a left joining part 42 in which the lower parts of the left and right side surface parts 31b in the first member 31 and the upper parts of the longitudinal wall parts 21a, 22a in the left and right longitudinal frames 21, 22 are bonded are provided in the seatback frame 20. The details of the positions of the joining parts 41, 42 will be described later. In addition, the first front wall part 31c neighbored to the side surface part 31 is bonded to the front flange parts 21b, 22b of the longitudinal frames 21, 22, and the first rear wall part 31d neighbored to the side surface part 31 is bonded to the rear flange parts 21c, 22c of the longitudinal frames 21, 22. The details will be described later.

The second member 32 includes, as shown in Figure 3, a lower surface part 32a, a second front wall part 32c, a second rear wall part 32d and side wall parts 32b in both side parts in the seat width direction. The lower surface part 32a has a plate-shaped section extending in the seat width direction, on which a substantially flat surface is formed. In this example, the lower surface part 32a extends substantially lineally, but, for example, a central part of the lower surface part 32a in the seat width direction may be curved to be positioned closer to the upward side than both the side parts in the seat width direction.

The second front wall part 32c is a flat, plate-shaped section extending in the seat width direction in a state of extending from a front end of the lower surface part 32a to the vehicle upward side. The second rear wall part 32d is, as similar to the second front wall part 32c, a flat, plate-shaped section extending in the seat width direction in a state of extending from a rear end of the lower surface part 32a to the vehicle upward side.

The side wall part 32b projects, as shown in Figure 3, to the vehicle upward side from the outer side end in the seat width direction of the lower surface part 32a. A vehicle vertical height on a basis of the lower surface part 32a from which the side wall part 32b projects is configured to be lower than a vehicle vertical height of each of the second front wall part 32c and the second rear wall part 32d.

An upward opening part opening to the vehicle upward side is formed in an upper part of the second member 32 by an upper part of the second front wall part 32c, an upper part of the second rear wall part 32d and upper parts of the respective side wall parts 32b. The second member 32 is formed in a box shape opening to the vehicle upward side. In addition, a ]-shaped traverse cross section (an open cross-sectional structure) opening to the vehicle upward side is configured in the second member 32 by the lower surface part 32a, the second front wall part 32c and the second rear wall part 32d.

Next, an explanation will be made of the bond between the first member 31 and the second member 32. The second member 32 is bonded in a state of being accommodated in the inner side of the downward opening part of the first member 31.

As shown in Figure 4, the first member 31 and the second member 32 are bonded by an adhesive agent in a state in which a front surface (an outer surface) of the second front wall part 32c in the second member 32 abuts on a rear surface (an inner surface) of the first front wall part 31c in the first member 31. Likewise, the first member 31 and the second member 32 are bonded by an adhesive agent in a state in which a rear surface (an outer surface) of the second rear wall part 32d in the second member 32 abuts on a front surface (an inner surface) of the first rear wall part 31d in the first member 31.

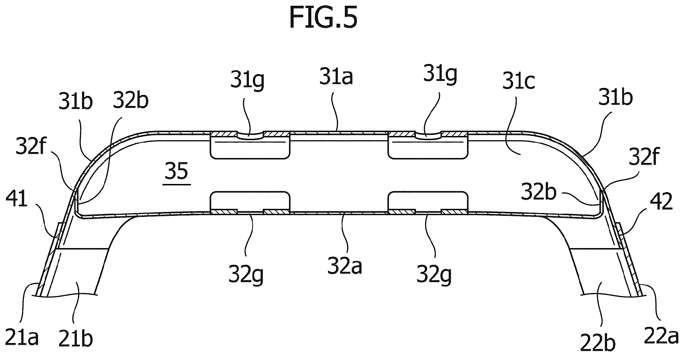

Further, as shown in Figure 5, an upper end of the side wall part 32b in the second member 32 abuts on a lower surface side (a backside) of the side surface part 31b in the first member 31. By bonding the first member 31 and the second member 32 by the adhesive agent as described above, a hollow closed cross-sectional structure 35 is configured by the first member 31 and the second member 32 as shown in Figure 4 and Figure 5. In Figure 5, illustration of the second front wall part 32c bonded to the first front wall part 31c is omitted.

By configuring the upper cross member 30 and the like as described above, it is possible to ensure the rigidity of the upper cross member 30 while suppressing the separation of the bond in the bonding section of the hollow closed cross-sectional structure 35 provided in the upper cross member 30 configuring the seatback frame 20.

The upper cross member 30 required to have high bending rigidity and torsional rigidity has the hollow closed cross-sectional structure 35. On the other hand, the left and right longitudinal frames 21, 22 lower in required strength than the upper cross member 30 are formed of a ]-shaped open cross-sectional structure opening to the inner side. Thereby, in the seatback frame 20 it is possible to acquire the seatback frame structure lighter in weight than in a case in which the seatback frame 20 is all formed of the closed cross-sectional structure.

Further, since the carbon fiber-reinforced resin material is higher in price than a steel material, it is possible to reduce the use amount of the carbon fiber-reinforced resin material by selecting the hollow closed cross-sectional structure and the open cross-sectional structure for use as needed in the seatback frame structure. As a result, it is possible to hold down material cost.

In addition, the two components of the first member 31 and the second member 32 of the ]-shaped structure opening to the vehicle upward side or the vehicle downward side are overlapped in the vehicle vertical direction and are bonded by an adhesive agent to form the hollow closed cross-sectional structure 35. Therefore, the two components are configured such that the separation load does not act on only the bonding section bonded by the adhesive agent. In this case, the separation load and a compression load act on the bonding section of the first member 31 and the second member 32. Therefore, it is possible to suppress the separation load to the bonding section formed by the adhesive agent. As a result, the breakage of the bonding section can be suppressed.

Since each member of the first member 31, the second member 32 and the like is formed in a simple drawn shape, degree of difficulty in manufacture is low. Therefore, in the construction method of the carbon fiber-reinforced resin material, the manufacture using RTM or press affordable in price and short in tact time is made possible.

Next, an explanation will be made of the right joining part 41 in which the first member 31 and the right longitudinal frame 21 are bonded. The right side surface part 31b of the first member 31 in the seat width direction is bonded to the longitudinal wall part 21a in a state of being inserted in the inner side of the inner opening part of the right longitudinal frame 21.

As described above, in the first member 31 the front surface (the outer surface) of the first front wall part 31c disposed in the front end of the right side surface part 31b in the seat width direction is bonded by an adhesive agent in a state of abutting on the rear surface (the inner surface) of the front flange part 21b in the right longitudinal frame 21. Likewise, the rear surface (the outer surface) of the first rear wall part 31d disposed in the rear end of the right side surface part 31b in the seat width direction is bonded by an adhesive agent in a state of abutting on the front surface (the inner surface) of the rear flange part 21c in the right longitudinal frame 21.

Next, an explanation will be made of the left joining part 42 in which the first member 31 and the left longitudinal frame 22 are bonded. The left side surface part 31b of the first member 31 in the seat width direction is bonded to the longitudinal wall part 22a in a state of being inserted in the inner side of the opening part of the left longitudinal frame 22.

In the first member 31 the front surface (the outer surface) of the first front wall part 31c disposed in the front end of the left side surface part 31b in the seat width direction is bonded by an adhesive agent in a state of abutting on the rear surface (the inner surface) of the front flange part 22b in the left longitudinal frame 22. Likewise, the rear surface (the outer surface) of the first rear wall part 31d disposed in the rear end of the left side surface part 31b in the seat width direction is bonded by an adhesive agent in a state of abutting on the front surface (the inner surface) of the rear flange part 22c in the left longitudinal frame 22.

As describe above, the left and right longitudinal frames 21, 22 are arranged in the first member 31 of the upper cross member 30 in the outer side of the seat width direction. Thereby, for example, when a rear collision load is input to the upper cross member 30, the left and right longitudinal frames 21, 22 can suppress deformation of the upper cross member 30 in the load direction. As a result, the rear collision load can be borne by the joining parts 41, 42 by the adhesive agent, and can be further borne by the longitudinal frames 21, 22 as well on the structure.

If the left and right longitudinal frames 21, 22 are arranged in the inner side of the upper cross member 30, the section bearing the rear collision load is borne only by the adhesion strength of the left and right joining parts 41, 42 formed by the adhesive agent. Meanwhile, the strength against the rear collision load improves with the configuration as described above.

Further, in the configuration as described above, since the coated area of the adhesive agent is small, the use amount of the adhesive agent can be suppressed, leading to a reduction in cost. In addition, since the adhesive agent is applied primarily to the end part of the member, the workability is also excellent. Further, it is possible to reduce a size of tools for fixation or the like.

Further, in the present embodiment, as shown in Figure 4, the vehicle vertical positions of the left and right joining parts 41, 42 in which the first member 31 and the left and right longitudinal frames 21, 22 are bonded are arranged closer to the vehicle downward side than the vehicle vertical position of the hollow closed cross-sectional structure 35 configured by the first member 31 and the second member 32 and closer to the vehicle upward side than the vehicle vertical position P in which the seat front-back direction width in the left and right longitudinal frames 21, 22 is the smallest. That is, the joining parts 41, 42 are arranged in an area in a range shown in X of Figure 4. In Figure 4, the position of the left joining part 42 is shown, but the right joining part 41 is also similar thereto.

In this way, when the left and right joining parts 41, 42 are located to be away from the stress concentration section, the breakage due to the collision load or fatigue can be suppressed.

Here, an explanation will be made of a state in which the headrest frame 4a is attached to the upper cross member 30. As shown in Figure 5, two upper through holes 31g are formed on the upper surface part 31a of the first member 31. The through holes are arranged to be spaced in the seat width direction. Likewise, two lower through holes 32g are formed also on the lower surface part 32a of the second member 32. The lower through holes 32g are arranged to be spaced in the seat width direction.

The right upper through hole 31g in the upper surface part 31a and the right lower through hole 32g in the lower surface part 32a are communicated with each other in the vehicle vertical direction when the first member 31 and the second member 32 are assembled. Likewise, the left upper through hole 31g in the upper surface part 31a and the left lower through hole 32g in the lower surface part 32a are also communicated with each other.

The headrest frame 4a is inserted in the right upper through hole 31g and the right lower through hole 32g communicating in the upper-lower side and in the left upper through hole 31g and the left lower through hole 32g communicating in the upper-lower side. The four through holes 31g, 32g can be used as positioning holes at the time of assembling the upper cross member 30. For example, by inserting a round bar member in the through holes 31g, 32g communicating in the upper-lower side, the positional adjustment at the time of bonding the first member 31 and the second member 32 is easy.

The explanation of the present embodiment is shown as an example for explaining the present invention, and does not limit the inventions as claimed in the claims. In addition, each component element of the present invention is not limited to those in the embodiment, but can be variously modified within a technical scope in the description of claims.

According to the embodiment, in the hollow closed cross-sectional structure 35 configured by the first member 31 and the second member 32 an upper end 32h of the side wall part 32b in the second member 32 is caused to abut on the backside of the side surface part 31b in the first member 31, but this is not limited thereto, and it may be bonded by an adhesive agent. In addition, the first front wall part 31c and the second front wall part 32c may be arranged reversely in the front and back for bonding. That is, the second front wall part 32 may be bonded to the front surface of the first front wall part 31c. The same can be applied to the first rear wall part 31d and the second rear wall part 32d as well.

The bond between the upper cross member 30, and the left and right longitudinal frames 21, 22 is not limited to the bond by the adhesive agent, and may be a mechanical join (rivet join or caulked join). In addition, the longitudinal frames 21, 22 are not limited to a fiber-reinforced resin material, and they may be of a metallic material, a non-ferrous metal material, or other resin materials.

### Reference Signs List

- 1: SEAT CUSHION
- 1a: SEATING SURFACE PART
- 2: SEATBACK
- 2a: BACKREST PART
- 4: HEADREST
- 4a: HEADREST FRAME
- 5: RAIL
- 11: SEAT CUSHION FRAME
- 21: RIGHT LONGITUDINAL FRAME (SIDE FRAME)
- 21a: LONGITUDINAL WALL PART
- 21b: FRONT FLANGE PART
- 21c: REAR FLANGE PART
- 21d: INSTALLATION PART
- 21e: LARGE DIAMETER HOLE
- 21f: SMALL DIAMETER HOLE
- 22: LEFT LONGITUDINAL FRAME (SIDE FRAME)
- 22a: LONGITUDINAL WALL PART
- 22b: FRONT FLANGE PART
- 22c: REAR FLANGE PART
- 22d: INSTALLATION PART
- 22e: LARGE DIAMETER HOLE
- 22f: SMALL DIAMETER HOLE
- 30: UPPER CROSS MEMBER
- 31: FIRST MEMBER
- 31a: UPPER SURFACE PART
- 31b: SIDE SURFACE PART
- 31c: FIRST FRONT WALL PART
- 31d: FIRST REAR WALL PART
- 31g: UPPER THROUGH HOLE
- 32: SECOND MEMBER
- 32a: LOWER SURFACE PART
- 32b: SIDE WALL PART
- 32c: SECOND FRONT WALL PART
- 32d: SECOND REAR WALL PART
- 32g: LOWER THROUGH HOLE
- 39: RECLINING MECHANISM
- 41: RIGHT JOINING PART
- 42: LEFT JOINING PART

## Claims

1. A vehicular seatback frame structure comprising:
two side frames (21, 22) that extend in a vehicle vertical direction and are arranged to be spaced in a seat width direction; and
an upper cross member (30) that extends in the seat width direction and connects upper parts of the respective side frames (21, 22), wherein
the upper cross member (30) includes a first member (31) extending in the seat width direction, and a second member (32) disposed under the first member (31) and extending in the seat width direction,
the first member (31) has a lower part that is provided with a downward opening part extending in the seat width direction and opening to the vehicle downward side,
the second member (32) has an upper part that is provided with an upward opening part extending in the seat width direction and opening to the vehicle upward side, and
the upper cross member (30) has a closed cross-sectional structure configured by the downward opening part of the first member (31) and the upward opening part of the second member (32),
**characterized in that** the two side frames (21,22) are made of resin and a vehicle vertical position of a joining part (41, 42) between the upper cross member (30) and the side frame (21, 22) is disposed closer to the vehicle downward side than the vehicle vertical position of the closed cross-sectional structure of the upper cross member (30) and closer to the vehicle upward side than the vehicle vertical position in which a front-back direction width of the side frame (21, 22) is the smallest.

2. The vehicular seatback frame structure according to Claim 1, wherein
the side frame (21, 22) is provided with an inner opening part in the inner side in the seat width direction, the inner opening part extending in the vehicle vertical direction and opening to the inner side in the seat width direction,
the second member (32) is bonded in a state of being accommodated in the inner side of the downward opening part of the first member (31), and
the first member (31) has a seat width direction end part that is bonded in a state of being inserted in the inner side of the inner opening part of the side frame (21, 22).

## Patentansprüche

1. Rückenlehnen- Rahmenstruktur eines Fahrzeugsitzes, umfassend:
zwei Seitenrahmen (21, 22), die sich in einer vertikalen Richtung des Fahrzeugs erstrecken und so angeordnet sind, dass sie in einer Richtung der Sitzbreite beabstandet sind; und
einen oberen Querträger (30), der sich in Richtung der Sitzbreite erstreckt und obere Teile der jeweiligen Seitenrahmen (21, 22) miteinander verbindet, wobei
der obere Querträger (30) ein erstes Element (31) aufweist, das sich in Richtung der Sitzbreite erstreckt, und ein zweites Element (32), das unter dem ersten Element (31) angeordnet ist und sich in Richtung der Sitzbreite erstreckt,
das erste Element (31) einen unteren Teil aufweist, der mit einem nach unten öffnenden Teil versehen ist, der sich in Richtung der Sitzbreite erstreckt und sich zur Fahrzeugunterseite hin öffnet,
das zweite Element (32) einen oberen Teil aufweist, der mit einem nach oben öffnenden Teil versehen ist, der sich in Richtung der Sitzbreite erstreckt und sich zur Fahrzeugoberseite hin öffnet, und
das obere Querelement (30) eine geschlossene Querschnittsstruktur aufweist, die durch den nach unten offenen Teil des ersten Elements (31) und den nach oben offenen Teil des zweiten Elements (32) gebildet wird,
**dadurch gekennzeichnet, dass** die beiden Seitenrahmen (21, 22) aus Kunststoff hergestellt sind und eine vertikale Fahrzeugposition eines Verbindungsteils (41, 42) zwischen dem oberen Querträger (30) und dem Seitenrahmen (21, 22) näher zur Fahrzeugunterseite hin angeordnet ist als die vertikale Fahrzeugposition der geschlossenen Querschnittsstruktur des oberen Querträgers (30) und näher zur Fahrzeugoberseite hin als die vertikale Fahrzeugposition, in der eine Breite des Seitenrahmens (21, 22) in Vorwärts-Rückwärtsrichtung am kleinsten ist.

2. Rückenlehnen-Rahmenstruktur des Fahrzeugsitzes nach Anspruch 1, wobei
der Seitenrahmen (21, 22) mit einem inneren Öffnungsteil an der Innenseite in der Richtung der Sitzbreite versehen ist, wobei sich das innere Öffnungsteil in der vertikalen Richtung des Fahrzeugs erstreckt und sich zur Innenseite in der Richtung der Sitzbreite öffnet,
das zweite Element (32) in einem Zustand geklebt ist, in dem es in der Innenseite des nach unten offenen Teils des ersten Elements (31) aufgenommen ist, und
das erste Element (31) einen Endteil in Richtung der Sitzbreite aufweist, der in einem Zustand eingeklebt ist, in dem er in die Innenseite des inneren Öffnungsteils des Seitenrahmens (21, 22) eingesetzt ist.

## Revendications

1. Structure d'armature de dossier de siège de véhicule comprenant :
deux armatures latérales (21, 22) qui s'étendent dans une direction verticale de véhicule et sont agencées pour être espacées dans une direction de largeur de siège ; et
une traverse supérieure (30) qui s'étend dans la direction de largeur de siège et raccorde des parties supérieures des armatures latérales (21, 22) respectives, dans laquelle
la traverse supérieure (30) comporte un premier organe (31) s'étendant dans la direction de largeur de siège, et un second organe (32) disposé sous le premier organe (31) et s'étendant dans la direction de largeur de siège,
le premier organe (31) a une partie inférieure qui est pourvue d'une partie d'ouverture vers le bas s'étendant dans la direction de largeur de siège et s'ouvrant vers le côté vers le bas de véhicule,
le second organe (32) a une partie supérieure qui est pourvue d'une partie d'ouverture vers le haut s'étendant dans la direction de largeur de siège et s'ouvrant vers le côté vers le haut de véhicule, et
la traverse supérieure (30) a une structure en coupe fermée configurée par la partie d'ouverture vers le bas du premier organe (31) et la partie d'ouverture vers le haut du second organe (32),
**caractérisée en ce que** les deux armatures latérales (21, 22) sont en résine et une position verticale de véhicule d'une partie de jonction (41, 42) entre la traverse supérieure (30) et l'armature latérale (21, 22) est disposée plus près du côté vers le bas de véhicule que la position verticale de véhicule de la structure en coupe fermée de la traverse supérieure (30) et plus près du côté vers le haut de véhicule que la position verticale de véhicule dans laquelle une largeur de direction avant-arrière de l'armature latérale (21, 22) est la plus petite.

2. Structure d'armature de dossier de siège de véhicule selon la revendication 1, dans laquelle
l'armature latérale (21, 22) est pourvue d'une partie d'ouverture intérieure dans le côté intérieur dans la direction de largeur de siège, la partie d'ouverture intérieure s'étendant dans la direction verticale de véhicule et s'ouvrant vers le côté intérieur dans la direction de largeur de siège,
le second organe (32) est lié dans un état où il est accueilli dans le côté intérieur de la partie d'ouverture vers le bas du premier organe (31), et
le premier organe (31) a une partie d'extrémité de direction de largeur de siège qui est liée dans un état où elle est insérée dans le côté intérieur de la partie d'ouverture intérieure de l'armature latérale (21, 22).
